# EUROPÄISCHE PATENTSCHRIFT

(11) **EP 3 180 547 B1**
(45) Veröffentlichungstag und Bekanntmachung des Hinweises auf die Patenterteilung: **05.06.2019**
(21) Anmeldenummer: 15745423.2
(22) Anmeldetag: 21.07.2015
(51) Int. Cl.: F16H 55/06, F16F 15/30

(54) **VERFAHREN ZUR HERSTELLUNG EINES SCHWUNGRADS**
METHOD FOR FLYWHEEL PRODUCTION
METHODE POUR LA PRODUCTION D'UN VOLANT D'INERTIE

(30) Priorität: 13.08.2014 DE 102014111581
(43) Veröffentlichungstag der Anmeldung: 21.06.2017
(73) Patentinhaber: Mühlhoff Umformtechnik GmbH, 47589 Uedem (DE)
(72) Erfinder: HINCKERS, Hubert, 47574 Goch (DE)
(74) Vertreter: Fritz, Edmund Lothar
(86) Internationale Anmeldenummer: PCT/EP2015/066662
(87) Internationale Veröffentlichungsnummer: WO 2016/023715

(56) Entgegenhaltungen:
- EP-A1- 1 467 122
- EP-A2- 2 511 566
- US-A1- 2004 255 719

## Beschreibung

Die vorliegende Erfindung betrifft ein Verfahren zur Herstellung eines für einen Anlasser eines Fahrzeugs vorgesehenen Schwungrads, bei dem man ein Dämpfungsblechteil herstellt, indem man wenigstens ein erstes für das Schwungrad vorgesehenes metallisches Blechelement mit wenigstens einer weiteren Materiallage dauerhaft zu einem Sandwichbauteil verbindet, wobei man das erste Blechelement mit wenigstens einer zweiten parallelen Blechlage aufeinanderliegend ohne zwischenliegende viskoelastische Schicht durch einen Fügevorgang zu einer scheibenförmigen baulichen Einheit verbindet.

Schwungräder im Sinne der vorliegenden Erfindung sind insbesondere Schwungräder für Fahrzeuge wie PKWs und LKWs wie sie beispielsweise in der Start/Stopp-Automatik von Kraftfahrzeugen verwendet werden, aber auch bei Fahrzeugen ohne Start-Stopp-Automatik verwendete Schwungräder, also Standard-Schwungräder oder auch Schwungräder für jegliche andere Getriebevarianten.

Nachteilig bei den bekannten Schwungrädern, die zum Anlassen verwendet werden, sind die störenden Geräusche, die beim Anlassvorgang entstehen.

In der DE 602 19 270 T2 ist ein schalldämpfendes Anlassschwungrad beschrieben, bei dem zwischen der am äußeren Umfangsendabschnitt eines Trägers liegenden radialen Fläche und der am inneren Umfangsendabschnitt eines Zahnkranzes liegenden radialen Gegenfläche ein Element aus einem viskoelastischen Material angeordnet ist, welches in radialer und in axialer Richtung unter Druckspannung gesetzt wird. Bei diesem Element handelt es sich um eine Ringdichtung, die in eine Nut des Trägers eingedrückt und dadurch unter Spannung gesetzt wird.

Die DE 600 08 991 T2 beschreibt ein Schwungrad eines Verbrennungsmotors mit Anlasszahnkranz. Um den Lärmpegel beim Anlassen zu senken, wird hier zwischen einer Umfangsfläche eines Trägers des Schwungrads und einer komplementären Umfangsfläche eines auf dem Schwungrad befestigten Zahnkranzes ein Ring aus einem verformbaren elastomeren Material durch Kleben angebracht. Zusätzlich kann eine Auskleidung aus Elastomer oder Plastomer auf einer radialen Oberfläche zwischen Träger und Zahnkranz befestigt werden, welche etwa rechtwinklig zu der Umfangsfläche verläuft, um auf diese Weise einen Gleitkontakt zwischen dem Träger und dem Zahnkranz zu erlauben. Die Geräuschminderung soll somit hier erzielt werden, indem man eine Verformung des Zahnkranzes radial zur Welle des Schwungrads zulässt.

In der DE 10 2011 001 881 A1 ist ein Verfahren zur Herstellung eines Schwungrads mit den Merkmalen der eingangs genannten Gattung beschrieben, bei dem man ein Dämpfungsblechteil aus einem Verbundwerkstoff umfassend eine Schicht aus Stahlblech und eine viskoelastische Dämmschicht in einem Fügeprozess unter Druck und teilweiser Umformung mit einem als Schwungrad vorgesehenen metallischen Basiselement dauerhaft fest zu einem Sandwichbauteil verbindet. Alternativ kann auch eine Dämmschicht und /oder ein Klebstoff mit ähnlicher Materialeigenschaft eingesetzt werden. Hier wird das Bauteil für das Schwungrad aus mehreren Schichten in Sandwichbauweise aufgebaut, von denen mindestens eine Schicht, vorzugsweise eine innenliegende Schicht, eine viskoelastische Dämmschicht ist. Das Dämpfungsblechteil aus dem Verbundwerkstoff Stahl/Dämmschicht muss bei diesem bekannten Verfahren gesondert hergestellt werden. Erfahrungen mit diesem bekannten Verfahren haben gezeigt, dass es in nachteiliger Weise zu Verklebungen bei den Werkzeugen durch das Material der viskoelastischen Dämmschicht kommt. Die Umform- und Verbindungswerkzeuge müssen in so einem Fall gereinigt werden, wodurch zusätzlicher Aufwand entsteht und es zu Verzögerungen im Herstellungsprozess kommt.

Weiterhin haben Versuche mit den aus der DE 10 2011 001 881 A1 bekannten Sandwichbauteilen ergeben, dass über das Dämpfungsblechteil mit der viskoelastischen Dämmschicht keine Kräfte übertragen werden. Zudem wurde die Steifigkeit des Sandwichbauteils in nachteiliger Weise erhöht.

In der US 2004/0255719 A1 wird ein Zweimassenschwungrad beschrieben, bei dem eine primäre Masse an einer Kurbelwelle des Motors angebracht wird und die sekundäre Masse mit der Kupplung verbunden wird. Die beiden Massen werden torsionselastisch miteinander verbunden. Es wird vorgeschlagen, die beiden Blechteile der Massen durch eine Nietverbindung oder Schraubverbindung miteinander zu verbinden. Andere an sich bekannte Verbindungsmethoden wie Löten, Kleben, Schweißen oder Clinchen werden ebenfalls erwähnt, jedoch ist eine Verbindung der beiden Blechteile durch eine Verformung, d.h. einen Formschluss mittels einer Presse nicht offenbart.

Das Dokument EP1 467 122 A1 offenbart alle Merkmale des Oberbegriffs des Anspruchs 1.

Ausgehend von dem zuvor genannten Stand der Technik besteht die Aufgabe der vorliegenden Erfindung darin, ein alternatives Verfahren zur Herstellung eines Schwungrads mit den eingangs genannten Merkmalen zur Verfügung zu stellen, welches zu einem Schwungrad mit vibrationsdämmenden und geräuschdämmenden Eigenschaften führt und die genannten Nachteile vermeidet. Aufgabe der vorliegenden Erfindung ist es weiterhin, ein Schwungrad mit diesen Eigenschaften zur Verfügung zu stellen.

Die Lösung dieser Aufgabe liefert ein Verfahren zur Herstellung eines Schwungrads der eingangs genannten Gattung mit den kennzeichnenden Merkmalen des Hauptanspruchs bzw. ein Schwungrad mit den Merkmalen des Anspruchs 8. Erfindungsgemäß ist vorgesehen, dass bei dem Fügeprozess in einer Presse ein von dem jeweiligen Werkstoff der Blechlagen sowie deren Materialstärke abhängiger Anpressdruck auf die zu verbindenden Blechlagen ausgeübt wird und die beiden Blechlagen durch Durchsetzfügen (Clinchen) verformt und gegenseitig fixiert werden.

Im Gegensatz zum Stand der Technik wird nunmehr das scheibenförmige Sandwichbauteil der Mitnehmerscheibe eines Schwungrads aus zwei oder mehreren Blechlagen ohne Zwischenschaltung eines viskoelastischen Materials gefügt, d.h. es wird ein Doppelblech oder Mehrfachblech hergestellt. Dieses Doppelblechprinzip bedeutet, dass nunmehr die Kraftübertragung von der Kurbelwelle zum Wandler nicht wie bisher von nur einem, sondern von zwei oder mehreren aufeinander liegenden Blechlagen übertragen wird.

Durch die Herstellung derartiger Mitnehmerscheiben nach dem Doppelblechprinzip ergeben sich zum einen Vorteile im Bereich der Akustik. Aufgrund der Minderbelastung der angrenzenden Bauteile werden störende Resonanzgeräusche minimiert. Dazu erreicht man durch den zwei- oder mehrschichtigen Aufbau eine gute Klangdämpfung. Geräusche, die bei einem Schwungrad durch das einfahrende Starterritzel entstehen, werden deutlich abgeschwächt und sind nur noch dumpf wahrnehmbar. Dies ist insbesondere vorteilhaft bei einem Schwungrad für ein modernes Start-Stopp-System.

Bei der Herstellung des Schwungrads ergeben sich weiterhin wirtschaftliche Vorteile. Das bisher benötigte Klangdämpfungsblech mit viskoelastischer Schicht wird eingespart. Bei dem eingangs erwähnten bekannten Verfahren musste ein solches Klangdämpfungsblech in einem gesonderten Arbeitsgang hergestellt und mit dem Blechteil der Mitnehmerscheibe zusammengefügt werden. Das erfindungsgemäße Verfahren reduziert die Zahl der notwendigen Arbeitsgänge und ist daher kostengünstiger.

Weiterhin ist es von Vorteil, dass bei der erfindungsgemäßen Lösung die Belastung anderer Motorkomponenten gesenkt wird. Durch das Doppelblechprinzip wird bei gleicher Kraftübertragung eine höhere axiale und radiale Flexibilität erreicht. Diese führt durch die erreichte deutlich geringere Steifigkeit zu einer Minderbelastung der Lager in Getriebe und Motor. Auch wird durch das Einsparen das des bisher verwendeten Klangdämpfungsblechs mit viskoelastischer Schicht das Gesamtgewicht der Mitnehmerscheibe verringert. Das dadurch resultierende geringere Massenträgheitsmoment entlastet die angrenzenden Bauteile, die wiederum kleiner dimensioniert werden können.

Die Dämpfung erfolgt erfindungsgemäß anders als bei früheren Lösungen nicht mehr zwischen Träger und Zahnkranz des Schwungrads, sondern quasi im Trägerbauteil (entspricht nun dem sandwichartigen Dämpfungsblechteil) des Schwungrads selbst und dabei vollflächig, so dass das Trägerbauteil im wesentlichen über seine gesamte Flächenerstreckung schwingungs- und geräuschdämpfend ausgebildet ist. Beim Fügevorgang werden zwei oder mehrere im Prinzip runde Blechelemente mit scheibenförmiger Grundform in Richtung Ihrer Achse so gefügt, dass sie anschließend einen mehrschichtigen Verbund bilden, wobei sie sich mit ihren einander zugewandten Oberflächen miteinander verbinden. Die miteinander zu verbindenden Blechlagen haben jeweils etwa eine ähnliche scheibenartige geometrische Grundform im Umriss, können aber in Details voneinander abweichen. Sie können außerdem zusätzlich auch jeweils einander entsprechende oder auch unterschiedliche Verformungen senkrecht zur Ebene der Scheibenform aufweisen.

Vorzugsweise geht man so vor, dass man das Sandwichbauteil umfassend das erste Blechelement, die zweite Blechlage sowie gegebenenfalls weitere Blechlagen mindestens teilweise aus der Hauptebene des scheibenförmigen Sandwichbauteils heraus entsprechend der Form des Schwungrads verformt sowie an diesem gegebenenfalls Lochungen oder Ausstanzungen vornimmt. Die beiden Blechlagen können unter Druck zu einem Bauteil gefügt werden. Die gesamte Anordnung wird in der Regel bei diesem Fügevorgang so verpresst, dass sich die Ausgangslagen dauerhaft fest miteinander verbinden.

Der Fügevorgang der Blechlagen kann auch beispielsweise eine zusätzliche gegenseitige Fixierung der Blechlagen in radialer Richtung durch Einclipsen umfassen.

Gemäß einer bevorzugten Weiterbildung der Erfindung erhält beispielsweise nur eine Blechlage des scheibenförmigen Sandwichbauteils in einem radial äußeren Randbereich eine Aufkantung oder Umbiegung, die die zweite oder weitere Blechlagen nicht aufweisen.

Gemäß einer bevorzugten Variante der Erfindung weisen die aufeinanderliegenden Blechlagen des scheibenförmigen Sandwichbauteils keine gegenseitige Fixierung aneinander auf, so dass in radialer Richtung und/oder in axialer Richtung im Mikrobereich relative Lageänderungen der Blechlagen zueinander möglich sind.

Die Grundform des Schwungrads bzw. der Mitnehmerscheibe des Schwungrads kann beispielsweise von einer ersten Blechlage des Sandwichbauteils vorgegeben werden und bei dem Fügeprozess schmiegen sich quasi die zweite oder weitere Blechlagen formschlüssig an diese Grundform an, so dass danach ein Schwungrad in der gewünschten Form mit einem mindestens zweischichtigen Aufbau erhalten wird.

Ebenfalls vorteilhaft kann es sein, wenn der Fügevorgang der Belchlagen eine zusätzliche Fixierung beider Bauteile durch Haltelaschen umfasst.

Im Rahmen der vorliegenden Erfindung kommen grundsätzlich die verschiedensten Werkstoffpaarungen in Betracht. Vorzugsweise bestehen die Blechlagen des Sandwichbauteils aus einem unlegierten kaltumformbaren Stahlblech.

Das Fügen der Blechlagen geschieht unter einer Presse, wobei der beim Fügevorgang auszuübende Druck naturgemäß von der Werkstoffpaarung abhängt, sowie auch von der Materialstärke der verwendeten Blechlagen. Der dabei auf die zu verbindenden Blechlagen angewandte Anpressdruck kann somit über weite Bereiche variieren und beispielsweise im Bereich von einem oder mehreren bar liegen oder auch wesentlich höher sein.

Nach dem Fügevorgang schließen sich in der Regel weitere Arbeitsgänge an, beispielsweise Umform- und Beschneideoperationen, wobei derartige Verfahrensgänge natürlich auch vor dem Fügevorgang stattfinden können. In der Regel wird zudem nach dem Fügeprozess an dem Schwungrad ein äußerer Zahnkranz angebracht. Weitere Bauelemente des Schwungrads können beispielsweise angenietet, geschweißt oder angeschraubt werden.

Gegenstand der vorliegenden Erfindung ist weiterhin ein für einen Anlasser eines Kraftfahrzeugs vorgesehenes Schwungrad, welches nach einem Verfahren wie es zuvor beschrieben wurde hergestellt ist. Ein solches Schwungrad kann in einem Kraftfahrzeug beispielsweise im Bereich einer Start/Stopp-Einrichtung eingesetzt werden. Durch die erfindungsgemäße Geräuschdämpfung werden in vorteilhafter Weise die beim Anlassen entstehenden störenden Geräusche stark reduziert, was insbesondere bei Kraftfahrzeugen mit diesen Einrichtungen vorteilhaft ist, da bei diesen Anlassvorgänge erheblich häufiger vorkommen als bei konventionellen Fahrzeugen. Jedoch ist der Einsatz der erfindungsgemäßen Schwungräder ebenso bei Kraftfahrzeugen mit herkömmlichen Anlassern sinnvoll.

Die in den Unteransprüchen beschriebenen Merkmale betreffen bevorzugte Weiterbildungen der erfindungsgemäßen Aufgabenlösung. Weitere Vorteile der vorliegenden Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher erläutert. Dabei zeigen:
Figur 1 eine perspektivische Ansicht eines beispielhaften erfindungsgemäßen Schwungrads;
Figur 2 eine schematisch vereinfachte Schnittansicht durch einen Teil eines erfindungsgemäßen Schwungrads.

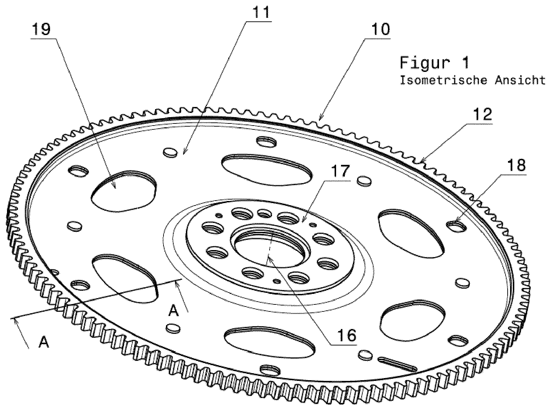

Es wird zunächst auf die Figur 1 Bezug genommen. Diese zeigt perspektivisch ein insgesamt mit dem Bezugszeichen 10 bezeichnetes Schwungrad, welches nach dem erfindungsgemäßen Verfahren hergestellt wurde. Im Prinzip weist ein solches Schwungrad 10 einen scheibenförmigen Grundkörper 11 aus Blech auf, der hierin auch als Mitnehmerscheibe bezeichnet wird. An seinem äußeren Umfang ist an dem scheibenförmigen Grundkörper 11 ringsum ein Zahnkranz 12 befestigt, beispielsweise angeschweißt.

Der scheibenförmige Grundkörper 11 weist in verschiedenen Bereichen meist über den Umfang verteilt Lochungen 19 mit unregelmäßiger Umrissform auf. Neben größeren Löchern 19 können beispielsweise noch an anderen Stellen kleinere Löcher 18 vorhanden sein. Auf das Lochmuster, die Form und Anzahl der diversen Löcher 19 kommt es im Rahmen der vorliegenden Erfindung nicht an, da es vielmehr prinzipiell um die Art der Herstellung und den Aufbau des erfindungsgemäßen Schwungrads geht. Ein zentrischer Bereich 17 des Schwungrads ist durch ein Umformverfahren aus der Ebene des scheibenförmigen Grundkörpers 11 heraus verformt, so dass dieser zentrische Bereich 17 gegenüber den sich radial nach außen hin anschließenden Bereichen erhaben ist. Auch dieser zentrische Bereich weist ein mittiges Loch 16 auf sowie einen Lochkranz mit mehreren kleineren Löchern, die das mittige Loch 16 ringsum konzentrisch umgeben. Diese konstruktiven Details betreffend den Aufbau des Schwungrads sind jedoch für die vorliegende Erfindung nicht entscheidend, da es hier vielmehr auf die Art der Herstellung des scheibenförmigen Grundkörpers 11 ankommt, der wie man andeutungsweise bereits im Bereich der Löcher 19 in Figur 1 erkennen kann ein sandwichartiges Bauteil aus mindestens zwei Blechlagen ist.

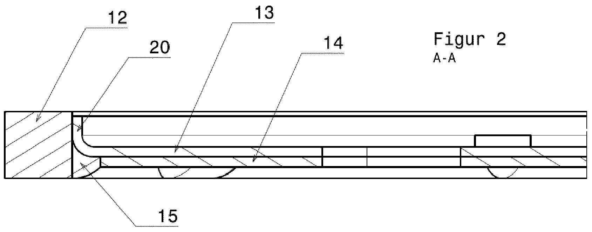

Dieser sandwichartige Aufbau des scheibenförmigen Grundkörpers wird nachfolgend unter Bezugnahme auf die Schnittansicht gemäß Figur 2 näher erläutert. Wie man dort gut erkennen kann, besteht der scheibenförmige Grundkörper 11 aus einem Doppelblech, d.h. es sind zwei in den meisten Bereichen zueinander parallel verlaufende Blechlagen 13, 14 vorhanden, die übereinander und im Prinzip aneinander anliegen.

In einem Fügeprozess unter Druck werden diese beiden übereinander liegenden Blechlagen 13, 14 dauerhaft fest miteinander zu einem Sandwichbauteil verbunden. Versuche im Hinblick auf die geräuschdämpfenden Eigenschaften eines solchen Schwungrads im Betrieb bei einem Anlassvorgang haben gezeigt, dass ein solches sandwichartiges Doppelblech bei Einwirkung von Kräften weicher reagiert als ein einzelnes Blech. Außenseitig über den Zahnkranz 12 ist das Schwungrad im Betrieb mit dem Getriebe verbunden. In den Zahnkranz 12 greift beispielsweise ein hier nicht dargestelltes Ritzel ein, wenn das Schwungrad in einer Start/Stopp-Vorrichtung eines Anlassers verwendet wird. Im zentrischen Bereich 17 wird die Mitnehmerscheibe des Schwungrads mit der Kurbelwelle des Motors verbunden (diese an sich bekannten Motoren/-Getriebeelemente sind in der vorliegenden Anmeldung nicht dargestellt.)

Bei einer Verformung eines erfindungsgemäßen Schwungrads von beispielsweise 1 mm in axialer Richtung muss nur eine Kraft von ca. 1080 N aufgebracht werden, wohingegen diese Kraft bei einem herkömmlichen Schwungrad nach dem Stand der Technik etwa doppelt so groß ist. Dadurch erhält man in wichtigen Bauteilen wie zum Beispiel in den Lagern einen erheblich geringeren Verschleiß und die Belastung der Kurbelwelle ist wesentlich geringer.

Durch Einsparung einer viskoelastischen Schicht wird gegenüber herkömmlichen Lösungen Gewicht eingespart, das Schwungrad wird leichter und hat ein geringeres Massenträgheitsmoment. Die geräuschdämpfende Wirkung des Doppelblechs ist gleichwohl sehr gut. Anstelle von zwei aufeinander liegenden Blechlagen können auch drei oder mehrere Blechlagen verwendet werden, wenn es die entsprechende Anwendung erfordert.

Die Verbindung des Doppelblechs mit den beiden Blechlagen 13, 14 am äußeren Umfang mit dem Zahnkranz kann beispielsweise wie in Figur 2 dargestellt über eine Schweißnaht 15 erfolgen. In ihrem jeweiligen äußeren Randbereich können die beiden Blechlagen 13, 14 jeweils unterschiedlich geformt sei. In dem Beispiel gemäß Figur 2 hat die untere Blechlage 14 einen geringeren Durchmesser, wodurch sie mit geringem Abstand zur Innenkante des Zahnkranzes 12 endet, wohingegen die obere Blechlage 13 einen etwas größeren Durchmesser aufweist und randseitig nach oben hin umgeformt ist, so dass sich eine radial äußere Aufkantung 20 ergibt, in deren Bereich die obere Blechlage 13 über eine kürzere Strecke etwa in achsparalleler Richtung verläuft, d.h. etwa senkrecht zur Hauptebene der Blechlage der Mitnehmerscheibe und gleichzeitig etwa parallel zur axial ausgerichteten Innenkante des Zahnkranzes 12.

Die beiden Blechlagen 13, 14 können auch beispielsweise zusätzlich durch Durchsetzfügen (Clinchen) so verformt werden, dass sich eine bessere gegenseitige Fixierung ergibt. Diese Art der Verbindung erleichtert beispielsweise den Transport der Bauteile bis zum Zusammenbau durch Schweißen.

Gemäß einem bevorzugten Verfahren kann die Herstellung eines erfindungsgemäßen Dämpfungsblechteils sowie eines Schwungrads beispielsweise mit der folgenden Abfolge von Verfahrensschritten erfolgen:
Die erste Blechlage und die zweite Blechlage werden gemeinsam in eine Presse eingelegt und werden in dieser gemeinsam entsprechend der gewünschten Form der herzustellenden Mitnehmerscheibe in einem oder mehreren Schritten umgeformt;
wenn dabei eine der Blechlagen in ihrem radial äußeren Bereich eine Aufkantung oder Umbiegung erhält-was nicht unbedingt erforderlich ist,-- dann hat dies den Vorteil, dass das zu einer Aussteifung und einer Glättung der Blechlage in der Ebene der Mitnehmerscheibe führt;
die beiden Blechlagen werden gegenseitig fixiert durch Durchsetzfügen (Clinchen), dieser Schritt ist optional und nicht unbedingt notwendig.);
die beiden Blechlagen werden dann gemeinsam gelocht, entsprechend dem erforderlichen Lochmuster für die herzustellende Mitnehmerscheibe;
die beiden Blechlagen werden dann vorzugsweise in ihrem radial äußeren Bereich sowohl miteinander als auch mit einem die Blechlagen radial außenseitig umgebenden Zahnkranz verschweißt;
im radial inneren Bereich wird die so erhaltene Mitnehmerscheibe mit Zahnkranz, die somit ein Schwungrad bildet, durch eine Verschraubung mit einer Kurbelwelle verbunden.

### Bezugszeichenliste

- 10: Schwungrad, Mitnehmerscheibe
- 11: scheibenförmiger Grundkörper
- 12: Zahnkranz
- 13: erste (obere) Blechlage
- 14: zweite (untere) Blechlage
- 15: Schweißnaht
- 16: mittiges Loch
- 17: erhabener zentrischer Bereich
- 18: kleinere Löcher
- 19: Löcher
- 20: Aufkantung, Umbiegung

## Patentansprüche

1. Verfahren zur Herstellung eines für einen Anlasser eines Kraftfahrzeugs vorgesehenen Schwungrads, bei dem man ein Dämpfungsblechteil herstellt, indem man wenigstens ein erstes für das Schwungrad vorgesehenes metallisches Blechelement (13) mit wenigstens einer weiteren Materiallage (14) dauerhaft zu einem Sandwichbauteil verbindet, wobei man das erste Blechelement (13) mit wenigstens einer zweiten parallelen Blechlage (14) aufeinanderliegend ohne zwischenliegende viskoelastische Schicht durch einen Fügevorgang zu einer scheibenförmigen baulichen Einheit (11) verbindet, **dadurch gekennzeichnet, dass** bei dem Fügeprozess in einer Presse ein von dem jeweiligen Werkstoff der Blechlagen sowie deren Materialstärke abhängiger Anpressdruck auf die zu verbindenden Blechlagen (13, 14) ausgeübt wird und die beiden Blechlagen (13, 14) durch Durchsetzfügen (Clinchen) verformt und gegenseitig fixiert werden.

2. Verfahren nach Anspruch 1, **dadurch gekennzeichnet, dass** man das Sandwichbauteil umfassend das erste Blechelement (13), die zweite Blechlage (14) sowie gegebenenfalls weitere Blechlagen mindestens teilweise aus der Hauptebene des scheibenförmigen Sandwichbauteils heraus entsprechend der Form des Schwungrads (10) verformt sowie an diesem gegebenenfalls Lochungen (18, 19)) oder Ausstanzungen vornimmt.

3. Verfahren nach Anspruch 1 oder 2, **dadurch gekennzeichnet, dass** nur eine Blechlage (13) des scheibenförmigen Sandwichbauteils in einem radial äußeren Randbereich eine Aufkantung (20) oder Umbiegung erhält, die die zweite oder weitere Blechlagen (14) nicht aufweisen.

4. Verfahren nach einem der Ansprüche 1 bis 3, **dadurch gekennzeichnet, dass** der Fügevorgang der Blechlagen (13, 14) eine zusätzliche gegenseitige Fixierung der Blechlagen in radialer Richtung durch Einclipsen umfasst.

5. Verfahren nach einem der Ansprüche 1 bis 4, **dadurch gekennzeichnet, dass** die aufeinanderliegenden Blechlagen (13, 14) des scheibenförmigen Sandwichbauteils keine gegenseitige Fixierung aneinander aufweisen und in radialer Richtung und/oder in axialer Richtung im Mikrobereich relative Lageänderungen der Blechlagen zueinander möglich sind.

6. Verfahren nach einem der Ansprüche 1 bis 5, **dadurch gekennzeichnet, dass** wenigstens eine Blechlage (13, 14) aus einem vorzugsweise unlegierten kaltumformbaren Stahlblech besteht.

7. Verfahren nach einem der Ansprüche 1 bis 6, **dadurch gekennzeichnet, dass** nach dem Fügeprozess an dem scheibenförmigen Sandwichbauteil (10) ein äußerer Zahnkranz (12) angebracht wird, welcher nur mit einer der Blechlagen oder mit beiden Blechlagen stoffschlüssig verbunden wird, wobei vorzugsweise auch die beiden Blechlagen in einem radial äußeren Bereich miteinander stoffschlüssig verbunden werden.

8. Für einen Anlasser eines Kraftfahrzeugs vorgesehenes Schwungrad, **dadurch gekennzeichnet, dass** dieses nach einem Verfahren gemäß einem der Ansprüche 1 bis 7 hergestellt ist.

9. Schwungrad nach Anspruch 8, **dadurch gekennzeichnet, dass** dieses für ein Kraftfahrzeug mit Start/Stopp-Automatik vorgesehen ist.

## Claims

1. A method for producing a flywheel intended for a starter of a motor vehicle, in which a damping plate part is produced by permanently connecting at least one first metallic plate element (13) provided for the flywheel and at least one additional material layer (14) into a sandwich component, wherein the first plate element (13) and at least one second, parallel plate layer (14) are connected into a disk-shaped structural unit (11) by means of a joining process such that they lie on top of one another without an intermediate viscoelastic layer, **characterized in that** a contact pressure, which depends on the respective material of the plate layers and their material thickness, is exerted upon the plate layers (13, 14) to be connected during the joining process in a press and the two plate layers (13, 14) are deformed and mutually fixed by means of clinching.

2. The method according to claim 1, **characterized in that** the sandwich component, which comprises the first plate element (13), the second plate layer (14) and optionally additional plate layers, is at least partially deformed out of the principal plane of the disk-shaped sandwich component in accordance with the shape of the flywheel (10) and holes (18, 19) or cutouts are optionally produced therein.

3. The method according to claim 1 or 2, **characterized in that** only one plate layer (13) of the disk-shaped sandwich component is in a radially outer edge region provided with an upturn (20) or fold, which the second or additional plate layers (14) do not comprise.

4. The method according to one of claims 1-3, **characterized in that** the joining process of the plate layers (13, 14) comprises additional mutual fixing of the plate layers in the radial direction by means of clipping.

5. The method according to one of claims 1-4, **characterized in that** the plate layers (13, 14) of the disk-shaped sandwich component, which lie on top of one another, are not mutually fixed on one another and microscale position changes of the plate layers relative to one another are possible in the radial direction and/or in the axial direction.

6. The method according to one of claims 1-5, **characterized in that** at least one plate layer (13, 14) consists of a preferably unalloyed, cold-formable steel plate.

7. The method according to one of claims 1-6, **characterized in that** an outer gear rim (12) is arranged on the disk-shaped sandwich component (10) after the joining process, wherein said gear rim is connected in a firmly bonded manner to only one of the plate layers or to both plate layers, and wherein the two plate layers preferably are also connected to one another in a firmly bonded manner in a radially outer region.

8. A flywheel intended for a starter of a motor vehicle, **characterized in that** said flywheel is produced with a method according to one of claims 1-7.

9. The flywheel according to claim 8, **characterized in that** said flywheel is intended for a motor vehicle with automatic start/stop system.

## Revendications

1. Procédé de fabrication d'un volant prévu pour un démarreur d'un véhicule automobile, dans lequel on fabrique une pièce en tôle d'amortissement en connectant de manière permanente en une pièce en sandwich au moins un premier élément en tôle (13) prévu pour le volant à au moins une autre couche de matériau (14), on connecte le premier élément (13) au moins à une seconde couche de tôle parallèle (14) en les superposant sans couche viscoélastique intermédiaire par une opération d'assemblage pour former une unité de construction en forme de disque (11), **caractérisé en ce que**, lors du processus d'assemblage dans une presse, une force de compression dépendant du matériau respectif des couches de tôle et de leur épaisseur de matière est exercée sur les couches de tôle à connecter (13,14) et les deux couches de tôle (13,14) sont déformées par assemblage traversant (scellement) et fixées mutuellement.

2. Procédé selon la revendication 1, **caractérisé en ce qu'**on façonne la pièce en sandwich comprenant le premier élément en tôle (13), la seconde couche de tôle (14) ainsi que le cas échéant, d'autres épaisseurs de tôle au moins partiellement dans le plan principal de la pièce en sandwich en forme de disque en fonction de la forme du volant (10) et qu'on pratique éventuellement des perforations (18,19) ou des évidements dans celle-ci.

3. Procédé selon la revendication 1 ou 2, **caractérisé en ce que** seule une couche de tôle (13) de la pièce en sandwich en forme de disque est pourvue, dans une zone périphérique radialement extérieure, d'une bordure (20) ou d'une pliure que la seconde ou les autres couches de tôle (14) ne présentent pas.

4. Procédé selon une des revendications 1 à 3, **caractérisé en ce que** l'opération d'assemblage des couches de tôle (13,14) comprend une fixation mutuelle supplémentaire des couches de tôle dans le sens radial par clipsage.

5. Procédé selon une des revendications 1 à 4, **caractérisé en ce que** les couches de tôle superposées (13,14) de la pièce en sandwich en forme de disque ne présentent pas de fixation mutuelle et que des micro-modifications de positions relatives dans le sens radial et/ou dans le sens axial des couches de tôle les unes par rapport aux autres sont possibles.

6. Procédé selon une des revendications 1 à 5, **caractérisé en ce qu'**au moins une couche de tôle (13,14) est composée d'une tôle d'acier déformable à froid, de préférence non alliée.

7. Procédé selon une des revendications 1 à 6, **caractérisé en ce que**, après le processus d'assemblage à la pièce en sandwich en forme de disque (10), est installée une couronne dentée (12) qui n'est connectée qu'à une des couches de tôle ou avec les deux couches de tôle par correspondance de matière, les deux couches de tôle étant aussi de préférence connectées l'une à l'autre par correspondance de matière dans une zone radialement extérieure.

8. Volant prévu pour un démarreur d'un véhicule automobile, **caractérisé en ce qu'**il est fabriqué d'après un procédé selon une des revendications 1 à 7.

9. Volant selon la revendication 8, **caractérisé en ce qu'**il est prévu pour un véhicule automobile équipé d'un automatisme de start/stop.
